# EUROPEAN PATENT APPLICATION

(11) **EP 2 397 238 A1**
(43) Date of publication of application: **21.12.2011**
(21) Application number: 10166565.1
(22) Date of filing: 18.06.2010
(51) Int. Cl.: B08B 17/04, G01N 1/22

(54) **Pump cover and use thereof**

(71) Applicant: Stojiljkovic, Nebojsa, 3078 WR Rotterdam (NL)
(72) Inventor: Stojiljkovic, Nebojsa, 3078 WR Rotterdam (NL)
(74) Representative: Algemeen Octrooi- en Merkenbureau

(57) **Abstract**

The present invention relates to a cover (1) for an air sampling pump (3). The present invention further relates to the use of a cover for an air sampling pump and a method for taking air samples. It further relates to a pump and cover.

## Description

The present invention relates to a cover for an air sampling pump. The present invention further relates to the use of a cover for an air sampling pump and a method for taking air samples.

Air sampling pumps are, for example, used in methods for detecting contamination in air samples. In these methods such a pump sucks in air and passes it over a filter present in the filter head of the pump. Possible contamination present in the air will largely remain on the filter which can be collected in order to determine the contamination.

In order to collect contamination with an air sampling pump said pump has to be placed in a contaminated environment after which one or more samples can be collected. This is for example the case in methods for determining asbestos contamination in air. In determining asbestos contamination, a pump is placed in a confined area in which contamination is to be detected. A downside of such a method is that the pumps are placed in a confined contaminated environment and as a result the pump will be contaminated on the outside with, possibly hazardous, pollutants. This means that when the pump is removed from the confined area it has to be cleaned in order to remove contamination from the outside of the pump and to prevent contamination to spread on the outside of the confined area. The transfer of contaminants to outside the contaminated environment via a tool, in the present case a pump, is generally referred to as secondary contamination.

In order to prevent spreading of the contamination outside of the contaminated area the pump has to be cleaned. Cleaning of a potentially contaminated pump includes rinsing the pump with water. Rinsing these pumps with water has several disadvantages. Firstly, the water itself has to handled with extra care since it now contains pollutants. And secondly, rinsing pumps with water will result in a reduced life span of the pump since water will remain in the pump after rinsing resulting in increased wear of the pump. thirdly, rinsing pumps after use does not completely remove pollutants from the outside of the pump, hence after cleaning a small amount of pollution remains behind on the outside of the pump.

It is an object of the present invention to keep the outside of an air sampling pump free of pollutants.

It is further an object of the present invention to prolong the life time of an air sampling pump.

One or more of these objects is met by a cover for an air sampling pump comprising an air inlet and an air outlet, said cover comprising:
a first opening through which the air sampling pump can be placed in the inner space of the cover;
a second opening for housing the inlet of said pump; and
at least one outlet opening for letting air exhausted by the pump exit the inner space of the cover, wherein the cover hermetically seals the air sampling pump inside said cover.

One or more of these objects is further met by the use of said cover for preventing any kind of contamination or any other kind of hazardous substances, of said air sampling pump during operation.

One or more of these objects is further met by an air sampling pump enclosed by a cover according to the present invention.

One or more of these objects is further met by a method for taking air samples through the use of an air sampling pump, comprising the steps of:
- providing an air sampling pump,
- providing said air sampling pump with a cover according to the present invention,
- placing said air sampling pump provided with the cover in a contaminated environment, and
- starting the air sampling pump.

Overview of figures.

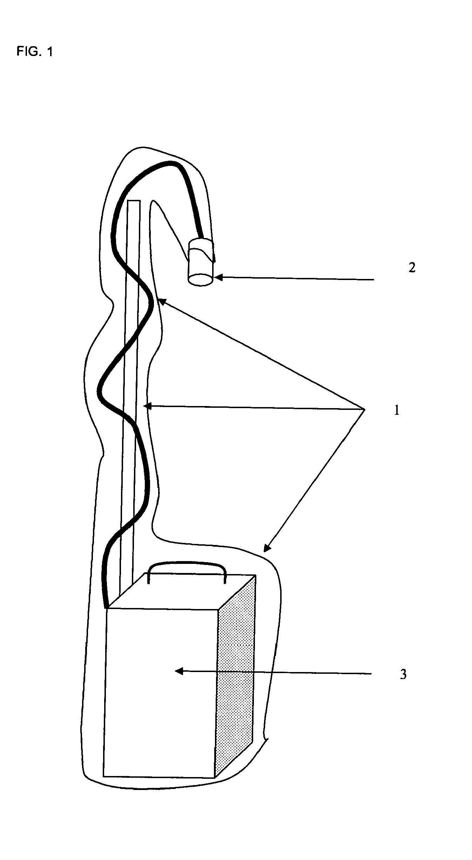

Figure 1 schematically depicts an assembly of a air sample pump and a cover according to the present invention.
Figure 2a and 2b each schematically depict a sheet of which a cover according to the present invention can be manufactured.

In order to collect contamination with an air sampling pump said pump has to be placed in a contaminated environment after which one or more samples can be collected. This is for example the case in methods for determining asbestos contamination in air. The present inventor discovered the problem of secondary contamination via air sampling pumps. The present inventor discovered the problem that pumps used in these methods are contaminated on the outside with traces of contaminants. The present inventor further discovered the problem that at least one third of the pumps used in these methods are, after cleaning, still contaminated on the outside with traces of contaminants.

A cover according to the present invention for an air sampling pump comprising an air inlet and an air outlet, comprises:
a first opening through which the air sampling pump can be placed in the inner space of the cover;
a second opening for housing the inlet of said pump; and
at least one outlet opening for letting air exhausted by the pump exit the inner space of the cover, wherein the cover hermetically seals the air sampling pump inside said cover. Hermetically, meaning no contaminated air can enter the inside of the cover.

Prior to sample taking an air sampling pump (3) is placed in a cover (1) according to the present invention. An air sampling pump (3) is placed in a cover according to the present via the first opening. After the pump is placed in the cover the first opening is closed. The cover is positioned in such a way that the air inlet (2) of the pump is housed in the second opening (4). The inlet is positioned in such a way that the outside of the inlet is substantially completely covered on the outside by the cover. The second opening (4) snugly fits the inlet (2) preventing air from flowing in between the cover and the inlet of the pump.

After the pump is positioned in a cover according to the present invention and the cover is closed, the covered pump can be used to collect samples in a contaminated area. After the pump is switched on, air is sucked into the pump and after filtering expelled by the pump on the inside of the cover. In order to prevent a to high difference between the pressure inside the cover and outside the cover, the cover is provided with an outlet opening allowing the clean air to exit the cover.

Due to the cover, the outside of the pump is not exposed to the possibly polluted environment whilst still allowing the pump to suck in air via the inlet. Since the pump is covered by a cover according to the present invention during operation, the cover prevents pollution of the outside of the pump. Since the outside of the pump is not contaminated during operation, the pump does not have to be rinsed afterwards in order to prevent spreading of contamination outside of the contaminated area. This makes rinsing of the pump superfluous and hence prevents the reduction of the life time of the pump since no water is used for cleaning the pump. It further results in the pumps being less contaminated than a pump cleaned after use without a cover.

In a preferred embodiment the cover according to the present invention the cover is a disposable cover. After use of the cover, the cover can be disposed of together with any other solid waste containing contamination, simplifying waste management since contaminated rinsing water is not present. It further is less time consuming to remove the cover and throw it away instead of thoroughly rinsing the outside of the pump.

In a preferred embodiment of the present invention the first opening is provided with closing means chosen from the group consisting of a zipper, a double sided tape, a hook-and-loop fastener or zip lock. Closing means from this group allow for the cover to be sufficiently closed to prevent air from flowing into the cover while closed. This prevents the inside of the cover to be contaminated and hence prevents the outside of the pump to be contaminated. By providing the second opening of the cover with a string or a rubber band the second opening can tightly fit around the inlet of the pump when it is positioned in the second opening. This prevents air from flowing through openings between the inlet and the cover preventing contamination on the inside of the cover. It further prevents to much clean air from flowing out of the second opening during operation mixing with the contaminated air flowing into the inlet and interfering with the sample collection process.

In a preferred embodiment of the present invention the second opening is provided with a stretching element, preferably a string or a rubber band. By providing the second opening of the cover with a string or a rubber band the second opening can tightly fit around the inlet of the pump when it is positioned in the second opening. This prevents air from flowing through openings between the inlet and the cover preventing contamination on the inside of the cover. It further prevents to much clean air from flowing out of the second opening during operation mixing with the contaminated air flowing into the inlet and interfering with the sample collection process.

In a preferred embodiment of the present invention the stretching element is provided with a tightening element for tightening the stretching element round the inlet of said pump. The tightening element allows the operator to tighten the fit of the second opening around the inlet of the pump.

In a preferred embodiment of the present invention the second opening is provided along its edges with a sleeve, said sleeve being provided on the inside with a stretching element, preferably a string or a rubber band. By providing the second opening of the cover with a string or a rubber band the second opening can tightly fit around the inlet of the pump when it is positioned in the second opening. This prevents air from flowing through openings between the inlet and the cover preventing contamination on the inside of the cover. It further prevents to much clean air from flowing out of the second opening during operation mixing with the contaminated air flowing into the inlet and interfering with the sample collection process.

In a preferred embodiment of the present invention the sleeve is provided with an opening through which a stretching element is drawn, which stretching element exits the opening via both sides of the sleeve which is provided with a tightening element for tightening the stretching element round the inlet of said pump. The tightening element allows the operator to tighten the fit of the second opening around the inlet of the pump.

In a preferred embodiment of the present invention the exit consists of at least two openings. These opening allow for the clean air exhausted by the pump during operation to exit the cover preventing an over pressure in the cover and hence preventing air from flowing out of the cover via the second opening. It further prevents that due to an over pressure the opening means of the first opening are torn allowing polluted air to enter the cover and hence contaminate the outside of the pump. Preferably the exit consists of a multitude of small openings allowing air to exit the cover during operation of the pump but to impede polluted air from entering the cover before and after operation of the pump.

In a preferred embodiment of the present invention the outlet opening of the cover is provided with an filter and/or one way valve and preferably an air filter like a P3-filter. The filter or one way valve prevents possibly polluted air from flowing into the cover when the pump is not operating. When the pump is operating, the filter and/or one way valve allows air to exit the cover.

In a preferred embodiment of the present invention the cover is made of plastics, preferably resilient, thin-walled plastic. The advantage of plastics is that it is cheap and allows for the cover according to the present invention to be easily manufactured. These are advantageous properties for a cover according the present invention since it is to be used as a single use cover. Preferably the cover according to the present invention is made of polyethylene. Polyethylene is cheap, allows for easy manufacture of the cover and is sufficiently strong for use as a cover. Preferably LDPE, LLDPE or LMDPE can be used.

In a preferred embodiment of the present invention the cover has a cone-like shape having a bottom, a top and a lateral surface, the bottom comprising the first opening, the top comprising the second opening and the lateral surface and/or the bottom comprises the at least one outlet opening. This cover has all the advantages as described above.

In a preferred embodiment of the present invention the cover is transparent. A transparent cover allows for the user to operate and monitor the pump without the need to open the cover. Since the cover does not have to be opened during operation of the pump it prevents possibly polluted air from entering the cover and hence prevents pollution of the outside of the pump.

The invention further relates to a use of a cover according to the present invention for preventing any kind of contamination or any other kind of hazardous substances, preferably asbestos contamination, of said air sampling pump during operation. The use of a cover according to the present invention prevents the pump of being contaminated on the outside during operation in a contaminated environment. Since the outside of the pump is not contaminated during operation, the pump does not have to be rinsed afterwards in order to prevent spreading of contamination outside of the contaminated area. This makes rinsing of the pump superfluous and hence prevents the reduction of the life time of the pump since no water is used. It further results in the pumps being less contaminated than a pump cleaned after use without a cover. After use of the cover, the cover can be disposed of.

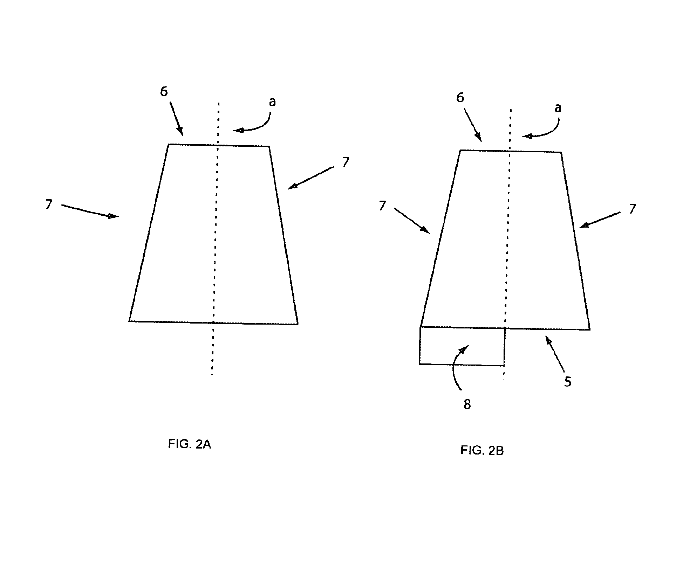

The cover according to the present invention preferably consists of one plastic sheet as depicted for example in figures 2a and 2b. In order to obtain a cover according to the present invention a sheet according to figure 2a or 2b is folded along line A resulting in edges 7 opposing each other. After the folding step opposing edges 7 are connected with each other. The opposing edges 7 are preferably connected with each other by applying heat. In the cover obtained from a sheet according to figure 2a or 2b, edge 6 defines the second opening. In a cover obtained from a sheet according to figure 2a, closing means are disposed along edges 7 prior to or after the folding step. In a cover obtained from a sheet according to figure 2b, part 8 functions as a closing member (for example as a flap) which closes the first opening as defined by edge 5. Said closing member can be provided with closing means, preferably chosen from the group consisting of a zipper, a double sided tape, a hook-and-loop fastener or a zip lock.

The invention further relates to a method for taking air samples through the use of an air sampling pump, comprising the steps of:
- providing an air sampling pump,
- providing said air sampling pump with a cover according to the present invention,
- placing said air sampling pump provided with the cover in a contaminated environment, and
- starting the air sampling pump.

With this method samples can be taken in contaminated areas without the outside of the air sampling pump being contaminated since the pump is placed in a cover according to the present invention. Since the pump is placed in the cover prior to sample taking, the outside of the pump is not exposed to the possibly polluted environment whilst still allowing the pump to suck in air via the inlet. Since the pump is covered by a cover according to the present invention during operation, the cover prevents pollution of the outside of the pump. Since the outside of the pump is not contaminated during operation, the pump does not have to be rinsed afterwards in order to prevent spreading of contamination outside of the contaminated area. This makes rinsing of the pump superfluous and hence prevents the reduction of the life time of the pump since no water is used for cleaning the pump. It further results in the pumps being less contaminated than a pump cleaned after use without a cover.

In a preferred embodiment of the present invention the air sampling pump provided with the cover is switched of after a sufficiently long time for taking one or more samples and removed from the contaminated area. After removal of the air sampling pump provided with the cover, the cover is removed from the pump and disposed. Since the outside of the pump is not contaminated during operation, the pump does not have to be rinsed afterwards in order to prevent spreading of contamination outside of the contaminated area. This makes rinsing of the pump superfluous and hence prevents the reduction of the life time of the pump since no water is used for cleaning the pump. Only the cover has to be disposed of.

## Claims

1. A cover for an air sampling pump comprising an air inlet and an air outlet, said cover comprising:
a first opening through which the air sampling pump can be placed in the inner space of the cover;
a second opening for housing the inlet of said pump; and
at least one outlet opening for letting air exhausted by the pump exit the inner space of the cover, wherein the cover hermetically seals the air sampling pump inside said cover.

2. A cover according to claim 1, **characterized in that** the first opening is provided with closing means chosen from the group consisting of a zipper, a double sided tape, a hook-and-loop fastener or a zip lock.

3. A cover according to any one of the preceding claims, **characterized in that** the second opening is provided with a stretching element, preferably a string or a rubber band.

4. A cover according to claim 3, **characterized in that** the stretching element is provided with a tightening element for tightening the stretching element round the inlet of said pump.

5. A cover according to any one of the preceding claims, **characterized in that** the cover has a cone-like shape having a bottom, a top and a lateral surface, the bottom comprising the first opening, the top comprising the second opening and the lateral surface and/or the bottom comprises the at least one outlet opening.

6. A cover according to any one of the preceding claims, **characterized in that** the exit is provided with a filter and/or one way valve and preferably an air filter, more preferably a P3 filter .

7. A cover according to any one of the preceding claims, **characterized in that** the cover is made of plastics, preferably polyethylene.

8. A cover according to any one of the preceding claims, **characterized in that** the exit consists of at least two openings and preferably at least 3 openings.

9. A cover according to any one of the preceding claims, **characterized in that** the cover is transparent.

10. A cover according to any one of the preceding claims, **characterized in that** the cover is a disposable cover.

11. A cover according to any one of the preceding claims, **characterized in that** the cover consists of a single sheet of plastics.

12. A cover according to any one of the preceding claims, **characterized in that** the cover comprises a closing member, preferably in the form of a flap (8).

13. A use of a cover according to any one of the preceding claims for preventing any kind of contamination or any other kind of hazardous substances, preferably asbestos contamination, of said air sampling pump during operation.

14. An air sampling pump enclosed by a cover according to any one of claims 1-12.

15. Method for taking air samples through the use of an air sampling pump, comprising the steps of:
- providing an air sampling pump,
- providing said air sampling pump with a cover according to any one of claims 1-12,
- placing said air sampling pump provided with the cover in a contaminated environment, and
- starting the air sampling pump.
